# EUROPEAN PATENT APPLICATION

(11) **EP 2 866 409 A1**
(43) Date of publication of application: **29.04.2015**
(21) Application number: 14188592.1
(22) Date of filing: 13.10.2014
(51) Int. Cl.: H04L 29/06, G03B 21/00, H04N 21/222

(54) **Image projection apparatus, image projection system, image projection method and program thereof**

(30) Priority: 28.10.2013 JP 2013222893
(71) Applicant: Ricoh Company, Ltd., Tokyo 143-8555 (JP)
(72) Inventor: Watanabe, Ayako, Ohta-ku, Tokyo 143-8555 (JP)
(74) Representative: Maury, Richard Philip

(57) **Abstract**

An image projection apparatus connected to a network and serving as an access point to connect a client apparatus to the network includes a determination unit that determines whether image data received from the client apparatus are addressed to the access point; a projection control unit that projects an image based on the image data received from the client apparatus when the image data are addressed to the access point; an authentication unit that performs an authentication for the client apparatus based on the image data when the image data are not addressed to the access point; and an access control unit that restricts an access from the client apparatus to the network when the image data received from the client apparatus are not addressed to the access point and the authentication for the client apparatus based on the image data by the authentication unit has failed.

## Description

### BACKGROUND OF THE INVENTION

### 1. Field of the Invention

The disclosures herein generally relate to an image projection apparatus, an image projection system, an image projection method and a program thereof.

### 2. Description of the Related Art

Some image projection apparatuses are known to be provided with a function of an access point of a wireless LAN (Local Area Network) (See, for example, Japanese Published Patent Application No. 2010-187168). The image projection apparatus provided with the function of the access point can project an image received from a client device or the like which is connected via the wireless LAN communication or the like. Moreover, the image projection apparatus provided with the function of the access point generally has a function of connecting the client device, connected via the wireless LAN, to a network connected by a wired LAN cable or the like, such as the Internet or a corporate LAN or the like.

In such an image projection apparatus provided with a function of an access point, there is a case where a projection of an image from a client device such as a PC (Personal Computer) connected via the wireless LAN is desired to be allowed while the connection to the network is prevented. For example, in the case where by using an image projection apparatus connected to the corporate LAN, a conference is conducted with a participant from outside the company, a projection of an image from a PC of the participant from outside is desired whereas a connection to the corporate LAN is prevented from a viewpoint of security.

In this case, when the connection from the PC of the participant from outside the company to the corporate LAN is restricted by using an authentication function of the image projection apparatus such as, for example, MAC (Media Access Control) address filtering, the projection of the image would be difficult. On the other hand, if the projection of image is prioritized, for example, the connection to the corporate LAN is disconnected and the PC of the participant from outside the company is connected to the image projection apparatus in the ad hoc mode or the like, a participant from inside the company also cannot connect to the network. In this way, for the image projection apparatus provided with the function of access point such as the wireless LAN, it has been difficult to allow a projection of an image from a wirelessly connected client apparatus and to ensure security in connecting to a network.

### SUMMARY OF THE INVENTION

It is a general object of at least one embodiment of the present invention to provide an image projection apparatus, an image projection system, an image projection method and a program thereof that substantially obviate one or more problems caused by the limitations and disadvantages of the related art.

In one embodiment, an image projection apparatus connected to a network and serving as an access point to connect a client apparatus to the network, includes a determination unit that determines whether image data received from the client apparatus are addressed to the access point; a projection control unit that projects an image based on the image data received from the client apparatus when the image data received from the client apparatus are addressed to the access point; an authentication unit that performs an authentication for the client apparatus based on the image data received from the client apparatus when the image data received from the client apparatus are not addressed to the access point; and an access control unit that restricts an access from the client apparatus to the network when the image data received from the client apparatus are not addressed to the access point and the authentication for the client apparatus based on the image data received from the client apparatus by the authentication unit has failed.

In another embodiment, an image projection method in an image projection apparatus connected to a network and serving as an access point to connect a client apparatus to the network, includes determining whether image data received from the client apparatus are addressed to the access point; projecting an image based on the image data received from the client apparatus when the image data received from the client apparatus are addressed to the access point; performing an authentication for the client apparatus based on the image data received from the client apparatus when the image data received from the client apparatus are not addressed to the access point; and restricting an access from the client apparatus to the network when the image data received from the client apparatus are not addressed to the access point and the authentication for the client apparatus based on the image data received from the client apparatus has failed.

In yet another embodiment, a non-transitory computer-readable storage medium stores a program for causing a computer to perform a process of projecting an image in an image projection apparatus connected to a network and serving as an access point to connect a client apparatus to the network. The process includes a step of determining whether image data received from the client apparatus are addressed to the access point; a step of projecting an image based on the image data received from the client apparatus when the image data received from the client apparatus are addressed to the access point; a step of performing an authentication for the client apparatus based on the image data received from the client apparatus when the image data received from the client apparatus are not addressed to the access point; and a step of restricting an access from the client apparatus to a network when the image data received from the client apparatus are not addressed to the access point and the authentication for the client apparatus based on the image data received from the client apparatus has failed.

According to the present embodiment, an image projection apparatus provided with a function of an access point of a wireless LAN or the like which allows a projection of an image from a client apparatus and ensures a security in connecting a network is provided.

### BRIEF DESCRIPTION OF THE DRAWINGS

Other objects and further features of embodiments will be apparent from the following detailed description when read in conjunction with the accompanying drawings, in which:
Fig. 1 is a diagram illustrating an example of a configuration of an image projection system according to an embodiment;
Fig. 2 is a diagram illustrating an example of a hardware configuration of an image projection apparatus according to the embodiment;
Fig. 3 is a diagram illustrating a functional configuration of the image projection apparatus according to the embodiment;
Fig. 4 is a flowchart illustrating an example of a flow of processing of the image projection apparatus according to the embodiment;
Fig. 5 is a diagram illustrating an example of a format of a data frame of a wireless LAN according to the embodiment;
Fig. 6 is a diagram for explaining values set for address fields in the data frame according to the present embodiment;
Fig. 7 is a sequence chart illustrating a flow of normal processing of the image projection apparatus according to the present embodiment;
Fig. 8 is a sequence chart illustrating a flow of error processing of the image projection apparatus according to the present embodiment;
Fig. 9 is a flowchart illustrating a flow of processing of an image projection apparatus according to a first embodiment;
Fig. 10 is a flowchart illustrating a flow of processing of an image projection apparatus according to a second embodiment; and
Fig. 11 is a diagram illustrating an example of a configuration of an image projection apparatus according to another embodiment.

### DESCRIPTION OF THE PREFERRED EMBODIMENTS

In the following, embodiments of the present invention will be described with reference to the accompanying drawings.

### <System configuration>

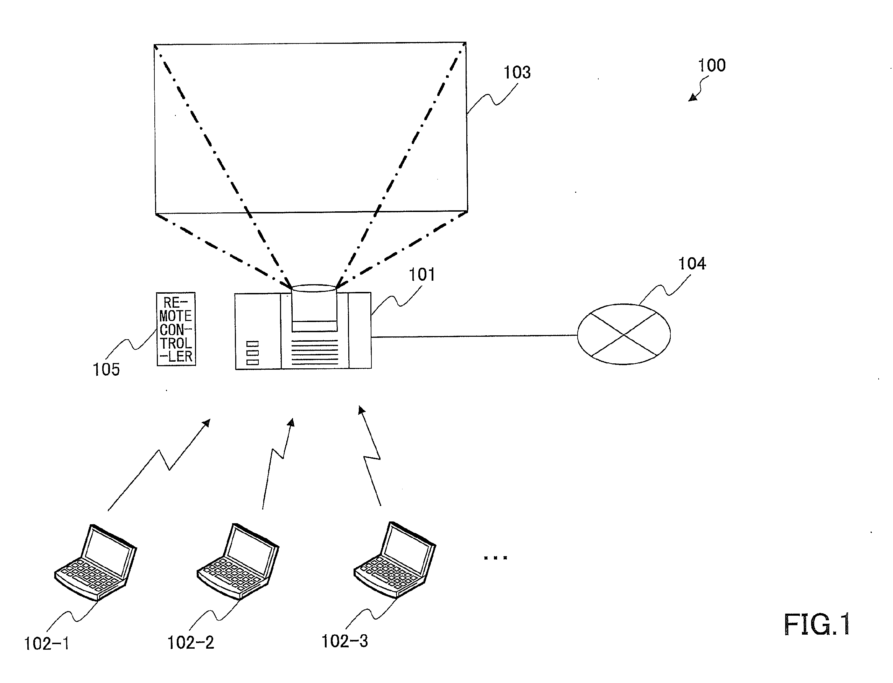

Fig. 1 is a diagram illustrating an example of a configuration of an image projection system according to an embodiment. The image projection system 100 includes, for example, an image projection apparatus 101 connected to a network 104 such as the Internet or a corporate LAN (Local Area Network), and plural client apparatuses 102-1, 102-2, and 102-3 which can be wirelessly connected to the image projection apparatus 101. Meanwhile, the number of the client apparatuses 102-1 to 102-3 is an example, and it may be another number. Moreover, in the case of indicating an arbitrary client apparatus of the client apparatuses 102-1 to 102-3, a term "client apparatus 102" is used.

The image projection apparatus 101 is provided with a function of an access point for a wireless LAN of, for example, the method of IEEE (The Institute of Electrical and Electronics Engineers) 802.11 and controls a connection between the client apparatus 102 and the network 104. Moreover, the image projection apparatus 101 has an image projection function and, for example, based on image data transmitted from the client apparatus 102 to the image projection apparatus 101, can project an image on a screen 103 or the like. Moreover, the image projection system 100 may be provided with a remote controller 105 for performing an operation of the image projection apparatus 101.

The client apparatus 102 is an information processing apparatus such as a PC (Personal Computer), a tablet-type terminal, or a smartphone, for example, which is provided with a function of a client for a wireless LAN of, for example, the method of IEEE 802.11. The client apparatus 102 can require the image projection apparatus 101 or the like provided with the function of the access point to connect to the network 104. Moreover, it can send image data which is desired to be projected by the image projection apparatus 101 to the image projection apparatus 101 by the wireless LAN communication and can cause the image projection apparatus 101 to project the image data.

Here, a process of connection between the wireless LAN access point and the wireless LAN client will be briefly explained. Meanwhile, a SSID (Service Set Identifier) which is an identifier for an access point of the connection destination is assumed to be registered to the client.

The wireless LAN access point sends a control signal called beacon at a predetermined time interval. The sent beacon includes information of, for example, a SSID of the access point, an available transmission rate, a wireless channel number or the like. A client within range of access of a radio wave that the access point sends, by receiving this beacon, can acquire information necessary for connecting to the access point (passive scanning). Or, it is possible for the client to send a control frame called probe request, for example, to a broadcast and to acquire information of an access point around the client by a probe response returned from the access point (active scanning). Meanwhile, the probe request may be sent to the registered SSID not to the broadcast.

The client upon recognizing an access point having the registered SSID based on the information acquired by the above scanning requires authentication for a wireless connection using an authentication frame. At this time, in the case where the SSID of the access point is not registered at the client, a list of SSID of access points detected by scanning may be displayed, so that a user can select an access point for a destination of connection.

Meanwhile, the authentication method of the wireless LAN of the method of IEEE 802.11 includes two kinds of authentication methods, i.e., an open system authentication and a shared key authentication are stipulated. In the following, the open system authentication will be explained. In the open system authentication an access point upon receiving an authentication frame that requires authentication from the client sends an authentication frame that permits authentication without performing substantive authentication processing. Meanwhile, the method of authentication may be the shared key authentication.

After the authentication is permitted the client requires a connection by sending an association request frame to the access point that performs the authentication for wireless connection. The access point that receives an association request sends an association response frame including a status code to the client that sends the association request. In the case where the wireless connection is successful the association response frame includes a status code representing "successful" and an identifier called AID (Association ID). When the wireless connection is successful sending/receiving data frames between the client and the access point becomes possible.

In the case of projecting an image from the client device 102 as in Fig. 1 by the image projection apparatus 101 a user may, for example, use application software or the like that operates on the client apparatus 102 and corresponds to the image projection apparatus 101. The user who projects an image after starting the application software corresponding to the image projection apparatus 101 in the client apparatus 102 inputs identification information such as a name, an identification number, or an IP address of, for example, an image projection apparatus 101 that is desired to project. Moreover, at this time if the image projection apparatus 101 is provided with a function of displaying an identification number or the like of the own apparatus on the projection screen of the own apparatus the user can easily acquire the identification number or the like of the image projection apparatus 101.

Afterwards, in response to an operation of the image projection by the image projection application an application corresponding to the image projection adds the destination of the image projection apparatus 101 to a data frame including image data to be projected and sends the frame.

The image projection apparatus 101 according to the present embodiment upon receiving a data frame from a client apparatus 102 wirelessly connected determines whether a destination of the data frame is the image projection apparatus 101.

In the case where the destination of the received data frame is the image projection apparatus 101, the image projection apparatus 101 performs a projection of an image based on data sent by the data frame. In this case, since the image projection apparatus 101 does not perform a substantive authentication for the client apparatus 102 that requires the image projection apparatus 101 to project, a projection of an image from an arbitrary client apparatus 102 becomes possible.

On the other hand, when the destination of the received data frame is different from the image projection apparatus 101, the image projection apparatus performs authentication processing. For example, in the image projection apparatus 101 identification information of a client apparatus 102 for which a communication other than an image projection is allowed is registered in advance and a data frame sent from a client apparatus 102 identification information of which is not registered is discarded. According to this processing the client apparatus 102 the identification information of which is not registered in advance cannot perform data communication other than the image projection. Meanwhile, the above authentication processing is an example and another authentication processing may be used.

Meanwhile, in the case where the image projection apparatus 101 receives images simultaneously from plural client apparatuses 102-1 to 102-3, for example, the plural received images may be projected by dividing a screen on the screen 103. Moreover, in the case where a number of the plural client apparatuses increases only a preset number of images (for example, two images) may be displayed on the screen 103.

According to the above configuration the image projection apparatus 101 provided with the function of the access point can project an image based on data received from an arbitrary client apparatus 102. Moreover, the image projection apparatus 101 can restrict an access from the client apparatus 102 which does not have identification information registered in advance to the network 104 or the like.

### <Hardware configuration>

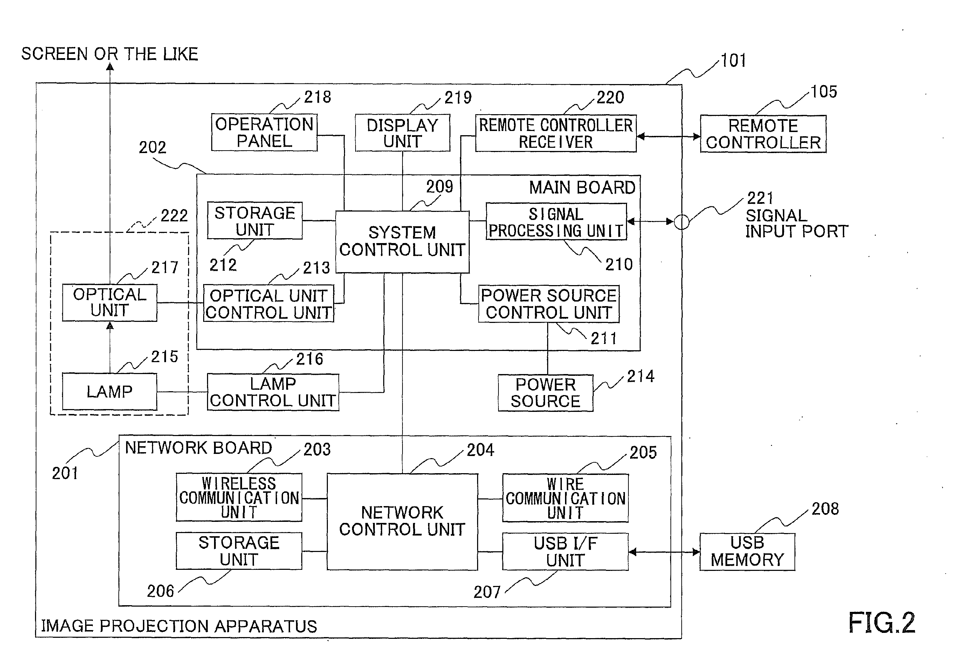

Fig. 2 is a hardware configuration diagram illustrating the image projection apparatus 101 according to the present embodiment. The image projection apparatus 101 includes a network board 201, a main board 202, a power source 214, a lamp 215, a lamp control unit 216, an optical unit 217, an operation panel 218, a display unit 219, and a remote controller receiver 220, a signal input port 221 or the like.

The network board 201 is a board that realizes a function related to communications and includes a wireless communication unit 203, a network control unit 204, a wire communication unit 205, a storage unit 206 and a USB I/F (Universal Serial Bus Interface) 207. The wireless communication unit 203 is a unit that performs wireless LAN communication. The wire communication unit 205 is a unit that performs wired LAN communication. The network control unit 204, for example, includes a CPU (Central Processing Unit) and its peripheral circuit, and performs control related to communication by executing a program stored in the storage unit 206 or the like.

The storage unit 206 stores a program which the network control unit 204 executes, identification information such as a MAC (Media Access Control) address or the like of a client apparatus which allows network communication or the like. The USB I/F unit 207 is an interface to which a USB memory 208 is connected to read/write data.

The main board 202 is a board that performs control related to the image projection and overall control of the image projection apparatus 101. The main board 202 includes a system control unit 209, a signal processing unit 210, a power source control unit 211, a storage unit 212 and an optical unit control unit 213. The system control unit 209 includes, for example, a CPU and its peripheral circuit and, for example, performs the control related to the image projection and the overall control of the apparatus by executing a program stored in the storage unit 212 or the like.

The signal processing unit 210 performs a process of acquisition of a video (image) signal input from the signal input port 221, for example, an image output signal from a computer, a HDMI (High-Definition Multimedia Interface, trademark registered) signal from video equipment or the like, a video signal or the like. The power source control unit 211 controls the power source 214. The optical unit control unit 213 controls the optical unit 217. The storage unit 212 stores image data to be projected, a program executed by the system control unit 209, a setting or the like.

Moreover, to the main board 202 the power source 214, the lamp control unit 216, the optical unit 217, the operation panel 218, the display unit 219, and the remote controller receiver 220 are connected. The power source 214 according to the control by the power source control unit 211 supplies power to each part of the image projection apparatus 101. The lamp control unit 216 according to the control by the system control unit 209 performs control for the lamp 215 such as a lighting/extinction and a control for brightness and the like. The optical unit 217 is a block that projects an image according to control by the optical unit control unit 213 and includes, for example, a DMD (Digital Mirror Device), a color wheel, a projection lens or the like.

The DMD is a display element including a lot of micro-mirrors arranged in a plane. The color wheel performs coloring, for example, by rotating at high speed a circular disk color coded in three colors of red, blue and green to transmit light. Meanwhile, the DMD and the color wheel are examples of the display element, and other display elements such as a LCD (Liquid Crystal Display) may be employed. Light emitted from the lamp 215 according to the image which is an object to be projected is reflected by the DMD a direction of which is controlled for every pixel, colored by the color wheel, and transmitted onto the projection plane through the projection lens to be focused into an image. The optical unit 217 and the lamp 215 may be, for example, a unit such as a projection unit 222. Moreover, the lamp 215 is an example of a light source for the image projection and a solid-state light source such as a LED (Light Emitting Diode) or a semiconductor laser may be used.

The operation panel 218 is an input device for performing a setting or the like for the image projection apparatus 101. The display unit 219 is, for example, a display device such as a LCD that displays a variety of information. The remote controller receiver 220 receives operation data or the like transmitted from the remote controller 105.

### <Functional configuration>

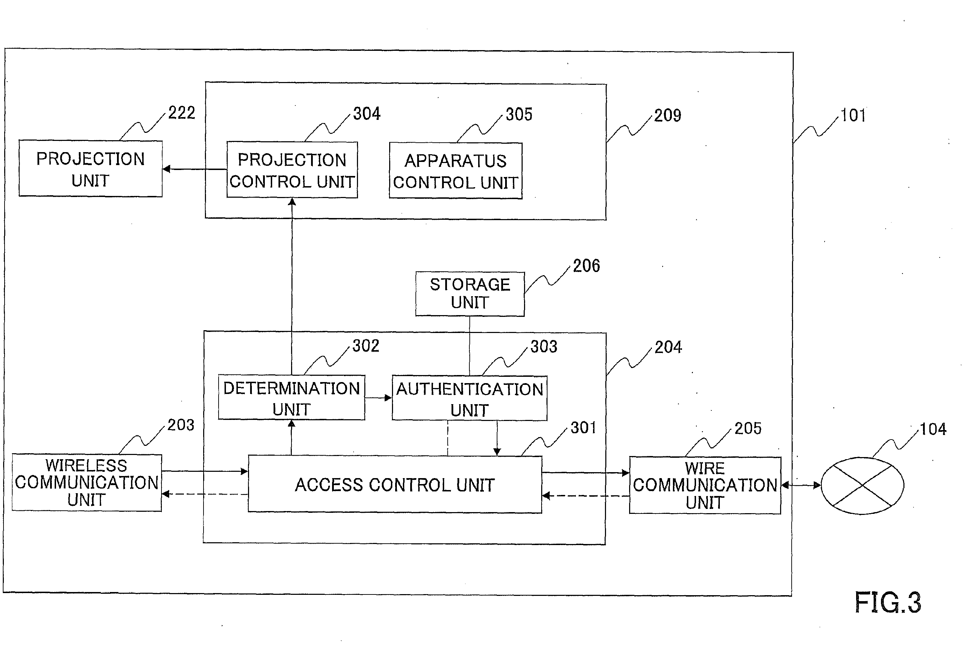

Fig. 3 is a diagram illustrating an example of a functional configuration of the image projection apparatus 101 according to the present embodiment. The network control unit 204 in the image projection apparatus 101 includes an access control unit 301, a determination unit 302 and an authentication unit 303. Meanwhile, the access control unit 301, the determination unit 302 and the authentication unit 303 are, for example, realized by a program executed by the CPU or the like in the network control unit 204.

The determination unit 302 determines whether a destination of a data frame received from the client apparatus 102 is a predetermined destination. Here, the predetermined destination is a destination to allow the image projection apparatus 101 project an image. The destination is, for example, a MAC address or the like of the image projection apparatus 101 which is an access point.

The authentication unit 303 performs an authentication for a data frame a destination of which is determined to be different from the predetermined destination. For example, identification information of a client apparatus 102 which is authorized for communication other than the image projection is stored in advance in the storage unit 206. An authentication for a data frame sent from the client apparatus 102 identification information of which is registered is "permitted". Moreover, an authentication for a data frame sent from a client apparatus 102 identification information of which is not registered is "rejected". The access control unit 301 based on a result of authentication by the authentication unit 303 controls transmission of a data frame from the client apparatus 102 to the network 104 or the like.

Moreover, the system control unit 209 of the image projection apparatus 101 includes a projection control unit 304 and an apparatus control unit 305. The projection control unit 304 based on the data frame determined by the determination unit 302 to have the predetermined destination controls the projection unit 222 or the like to project an image. The apparatus control unit 305 performs overall control of the image projection unit 101. Meanwhile, the projection control unit 304 and the apparatus control unit 305 are, for example, realized by a program executed by the CPU or the like in the system control unit 209.

### <Flow of processing>

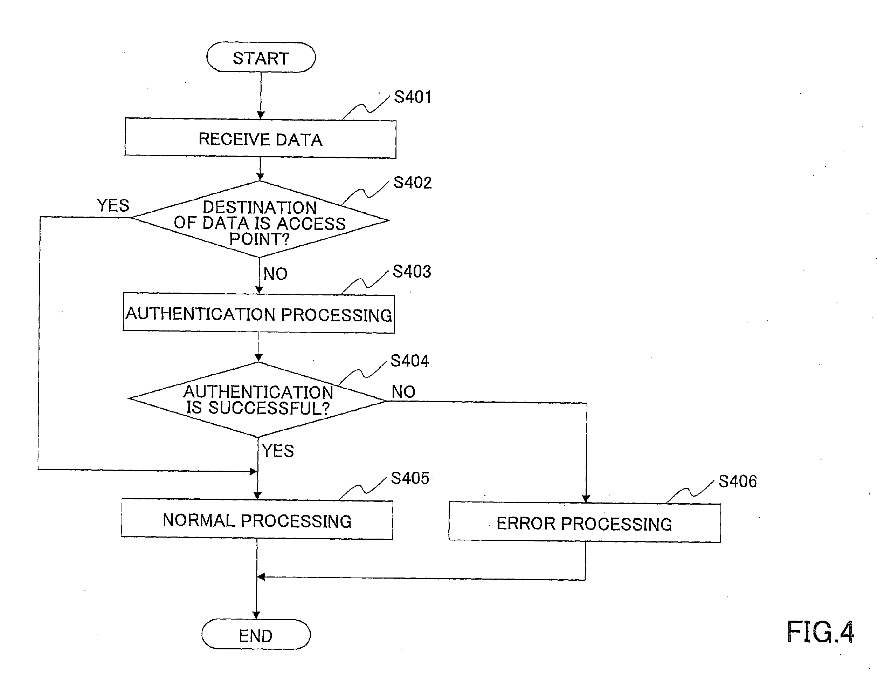

Fig. 4 is a flowchart illustrating an example of a flow of processing of the image projection apparatus 101 according to the present embodiment. When the radio communication unit 203 receives a data frame from the client apparatus 102 (step S401), the determination unit 302 determines whether a destination of the received data frame is the access point (image projection apparatus 101) (step S402). When the destination of the data frame is the access point (step S402: YES), normal processing is performed (step S405). Meanwhile, in the case where the destination of the data frame is the access point, the normal processing is, for example, projecting an image based on data in the data frame.

In the case where it is determined at step S402 that the destination of the data frame is different from the access point, the authentication unit 303 performs the authentication processing (step S403). When the authentication is permitted (step S404: YES), the access control unit 301 performs normal processing i.e. sends the data frame to the network 104 or the like via the wire communication unit 205 (step S405). On the other hand, when the authentication is rejected (step S404: NO), the access control unit 301 performs error processing, for example, discards the data frame or the like (step S406).

Here, a method of determining the address of the data frame will be briefly explained.

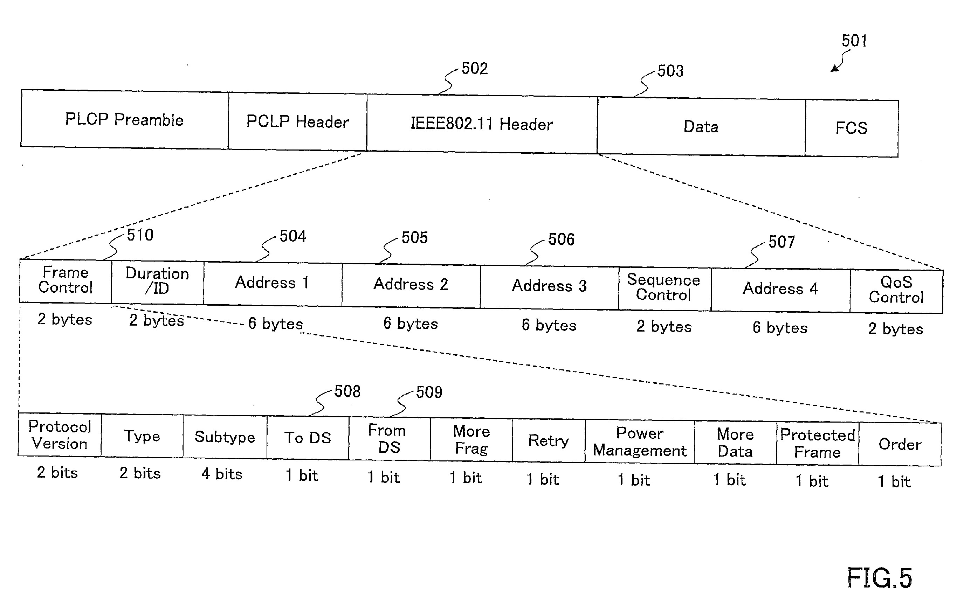

Fig. 5 is a diagram illustrating a format of a data frame of a wireless LAN according to the IEEE 802.11 method. An "IEEE 802.11 Header" field 502 shown in Fig. 5 stores information of a MAC address of the destination, a MAC address of the transmission source or the like. Moreover, a "data" field 503 stores a data main body e.g. an IP packet or the like.

In the "IEEE 802.11 Header" field 502 includes an "Address 1" field 504, an "Address 2" field 505, an "Address 3" field 506 and an "Address 4" field 507. A configuration of each address field can be determined by a combination of a "ToDS" (Distribution System) bit 508 and a "FromDS" bit 509 in a "Frame Control" field 510.

The "ToDS" bit 508 is set "1" when a reception station receiving a data frame is an access point and is set "0" when the reception station is a client. Moreover, the "FromDS" bit 509 is set "1" when a transmission station transmitting a data frame is an access point and is set "0" when the transmission station is a client. Accordingly, for the data frame that the image projection apparatus 101 receives from the client apparatus 102, since the transmission station is the client, the "FromDS" bit 509 is set "0".

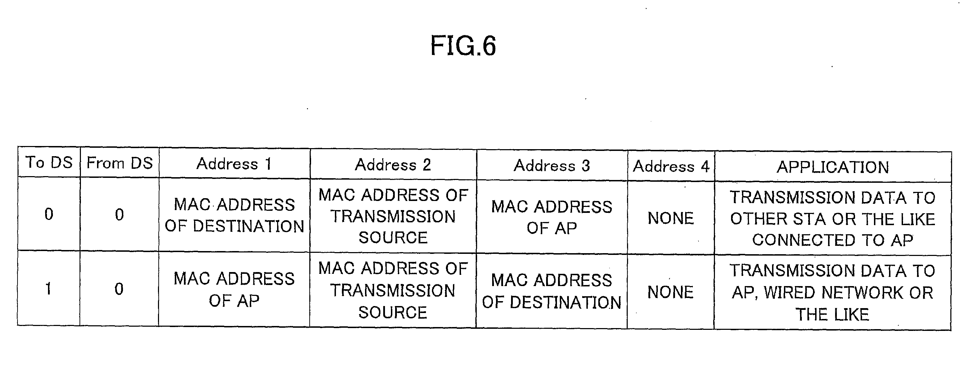

Fig. 6 is a diagram for explaining values set for address fields in the data frame according to the present embodiment. Meanwhile, in Fig. 6, an access point is denoted by "AP" and a client is denoted by "STA" (station).

In Fig. 6, in the case where the "ToDS" bit 508 is "0", the reception station is a client. This case corresponds to a case where, for example in Fig. 1, the client apparatus 102-1 transmits data to the client apparatus 102-2, 102-3 or the like. Accordingly, when the "ToDS" bit 508 is "0", it is possible to determine that the data is not a data frame transmitted from a client apparatus 102 to the image projection apparatus 101 which is an access point. Meanwhile, in this case the MAC address of the destination, the MAC address of the transmission source and the MAC address of the access point are set in the "Address 1" field 504, the "Address 2" field 505 and the "Address 3" field 506, respectively.

On the other hand, in the case where the "ToDS" bit 508 is "1", the reception station is an access point. Moreover, in this case the MAC address of the access point, the MAC address of the transmission source and the MAC address of the destination are set in the "Address 1" field 504, the "Address 2" field 505 and the "Address 3" field 506, respectively. Accordingly, in the case where the MAC address of the image projection apparatus 101 which is the access point is set in the "Address 1" field 504 and the "Address 3" field 506, it can be determined to be a data frame addressed to the image projection apparatus 101. Moreover, in the case where in the "Address 1" field 504 the image projection apparatus 101 is set and in the "Address 3" field 506 an address different from the image projection apparatus 101 is set, it can be determined not to be a data frame addressed to the image projection apparatus 101.

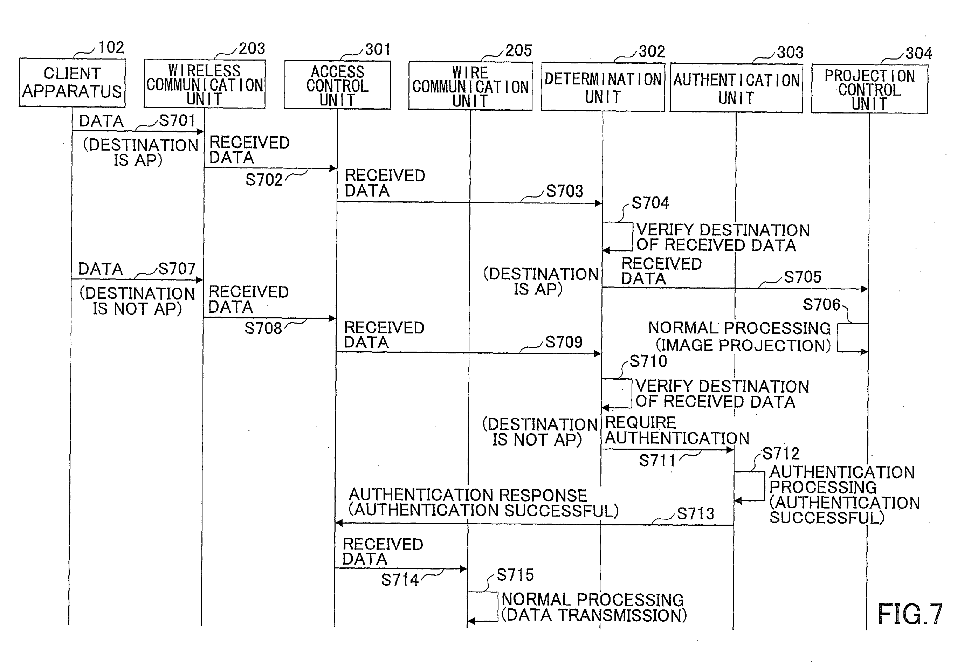

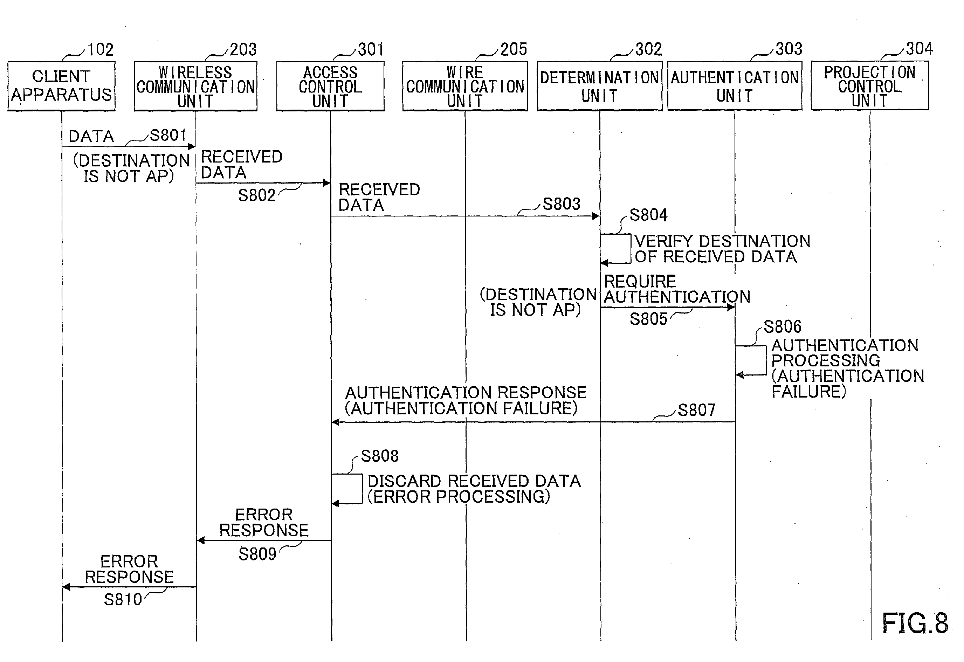

Next, referring to Figs. 7 and 8, flows of specific normal processing and error processing will be explained.

Fig. 7 is a sequence chart illustrating a flow of the normal processing of the image projection apparatus 101 according to the present embodiment. In Fig. 7, the client apparatus 102 transmits data addressed to the image projection apparatus 101 (step S701). The radio communication unit 203 receives the transmitted data, and the received data are sent to the determination unit 302 via the access control unit 301 (steps S702 and S703). The determination unit 302 verifies a destination of the received data (step S704), and forwards the received data to the projection control unit 304 (step S705) since the destination is an access point i.e. the image projection apparatus 101. The projection control unit 304 projects an image based on the received data that is forwarded (step S706).

On the other hand, the client apparatus 102 transmits data a destination of which is different from the image projection apparatus 101 (step S707). The radio communication unit 203 receives the transmitted data and the received data are sent to the determination unit 302 via the access control unit 301 (steps S708 and S709). The determination unit 302 verifies a destination of the received data (step S710) and requires the authentication unit 303 to perform an authentication (step S711) since the destination is different from an access point i.e. the image projection apparatus 101. The authentication unit 303 performs the authentication (step S712) and in the case where the authentication is successful, gives notice of a response of the authentication (authentication success) to the access control unit 301 (step S713). The access control unit 301 sends the received data to the wire communication unit 205 (step S714) based on a result of the authentication (authentication success). The wire communication unit 205 sends the received data to the network 104 (step S715).

Fig. 8 is a sequence chart illustrating a flow of the error processing of the image projection apparatus 101 according to the present embodiment.

The client apparatus 102 transmits data a destination of which is different from the image projection apparatus 101 (step S801). The radio communication unit 203 receives the transmitted data, and the received data are sent to the determination unit 302 via the access control unit 301 (steps S802 and S803). The determination unit 302 verifies a destination of the received data (step S804) and requires the authentication unit 303 to perform an authentication (step S805) since the destination is different from an access point i.e. the image projection apparatus 101. The authentication unit 303 performs the authentication (step S806) and in the case where the authentication is rejected, gives notice of a response of the authentication (authentication failure) to the access control unit 301 (step S807). The access control unit 301 discards the received data (step S808) based on a result of the authentication (authentication failure).

Afterwards, the access control unit 301 may send an error response as necessary to the client apparatus 102 via the wireless communication unit 203 (steps S809 and S810).

As described above according to the present embodiment the image projection apparatus 101 can project an image based on data addressed to the image projection apparatus 101 received from an arbitrary client apparatus 102.

Moreover, in the case where the destination of the data received from the client apparatus 102 is different from the image projection apparatus 101, the image projection apparatus 101 performs authentication processing. When the authentication is permitted, the image projection apparatus 101 transmits the data. When the authentication is rejected, the image projection apparatus 101 does not transmit the data.

According to the above-described operation in an image projection apparatus provided with a function of an access point such as a wireless LAN, it is possible to permit a client apparatus 102 to project an image and to ensure security in connecting to a network 104.

Next, authentication processing by the authentication unit 303 will be explained with reference to specific examples.

### [First embodiment]

A first embodiment is an example in the case where the authentication method by the authentication unit 303 is MAC address filtering. In this authentication method a MAC address of the client apparatus 102 a connection of which is allowed is, for example, registered in advance in a MAC address safe list stored in the storing unit 206 or the like. The authentication unit 303 verifies whether a MAC address of a transmission source of the received data is registered in the MAC address safe list. In the case where it is registered in the MAC address safe list, the authentication unit 303 allows the communication (authentication). On the other hand, when the MAC address of the transmission source is not registered in the MAC address safe list, the authentication unit 303 rejects the communication (authentication).

According to the above processing only the client apparatus 102 a MAC address of which is registered in the MAC address safe list can communicate. Meanwhile, registering the MAC address in the MAC address safe list includes, for example, registering by using a wireless LAN communication or a wired LAN communication or a registration by a USB memory or the like. Moreover, the MAC address safe list is not required to be stored inside the image projection apparatus 101, but may be stored in an external server or the like.

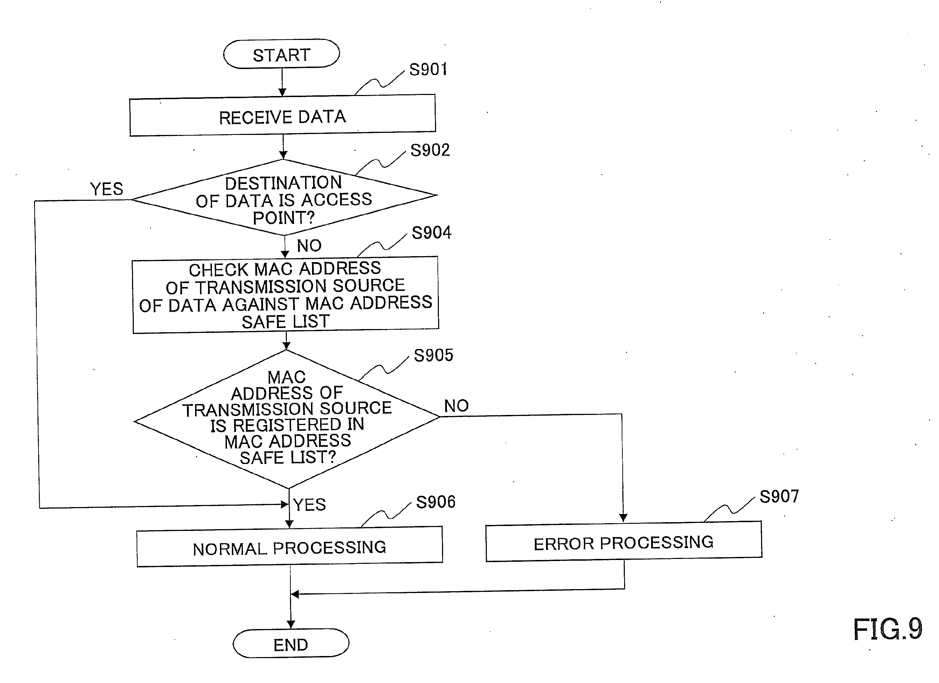

Fig. 9 is a flowchart illustrating a flow of processing of the image projection apparatus 101 according to the first embodiment. When data are received from the client apparatus 102 (step S901), the determination unit 302 determines whether a destination of the data is an access point (the image projection apparatus 101) (step S902). When the destination of the data is the access point (step S902: YES), normal processing is performed without an authentication (step S906). Meanwhile, the normal processing in this case is, for example, a processing of the projection control unit 304 projecting an image based on the received data or the like.

On the other hand, at step S902 in the case where the destination of the data is not the access point (step S902: NO), the authentication unit 303 verifies whether a MAC address of a transmission source of the received data is included in the MAC address safe list (step S904). When the MAC address of the transmission source of the data is registered in the MAC address safe list (step S905: YES), the access control unit 301 performs the normal processing (step S906). Meanwhile, the normal processing in this case is, for example, a process of converting the received data into a format of the wired LAN or the like and transmitting or the like.

Moreover, at step S905 when the MAC address of the transmission source of the data is not registered in the MAC address safe list (step S905: NO), the access control unit 301 performs error processing (step S907). Meanwhile, the error processing in this case is a process of not sending the received data, discarding the received data or the like.

According to the above operation the image projection apparatus 101 can project an image based on data received from an arbitrary client apparatus 102. Moreover, the image projection apparatus 101 can permit data communication of the client apparatus 102 other than the image projection when a MAC address of the client apparatus 102 is registered in the MAC address safe list. Moreover, the image projection apparatus 102 can restrict the data communication of the client apparatus 102 other than the image projection when a MAC address of the client apparatus 102 is not registered.

### [Second embodiment]

In the first embodiment in the case where the MAC address of the transmission source of the data is not registered in the MAC address safe list, the image projection apparatus 101 performs the error processing. In the second embodiment, in the case where the MAC address the MAC address of the transmission source of the data is not registered in the MAC address safe list, the image projection apparatus 101 requires the client apparatus 102 to send authentication information, for example, a password, a certificate or the like.

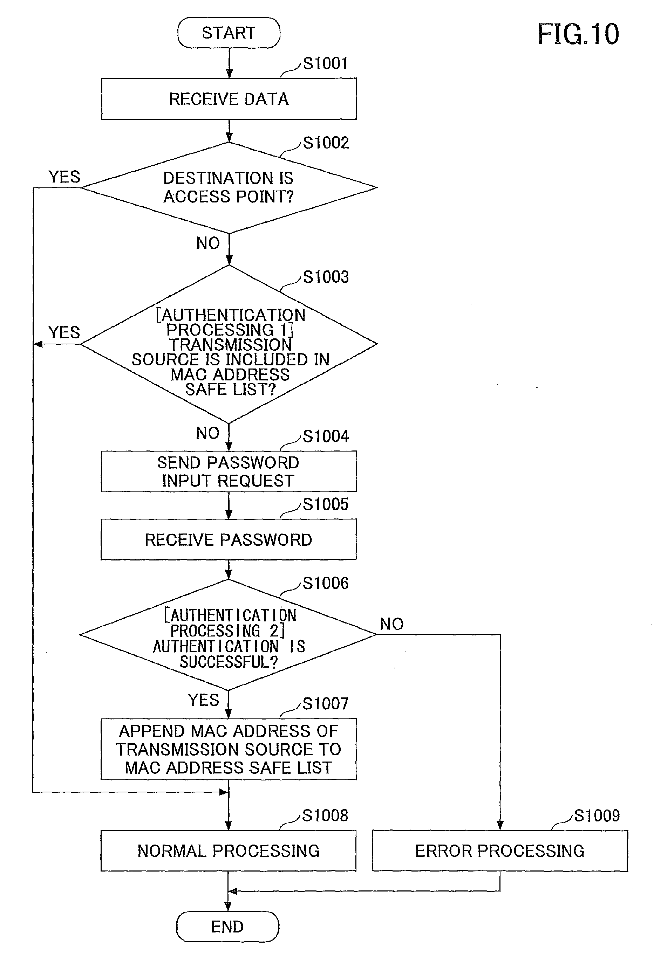

Fig. 10 is a flowchart illustrating a flow of processing of the image projection apparatus 101 according to the second embodiment. When data are received from the client apparatus 102 (step S1001), the determination unit 302 determines whether a destination of the data is an access point (the image projection apparatus 101) (step S1002). When the destination of the data is the access point (step S1002: YES), normal processing is performed without an authentication (step S1008).

On the other hand, at step S1002 in the case where the destination of the data is not the access point (step S1002: NO), the authentication unit 303 verifies whether the MAC address of the transmission source of the received data is included in the MAC address safe list (step S1003). When the MAC address of the transmission source of the data is registered in the MAC address safe list (step S1003: YES), the access control unit 301 performs the normal processing (step S1008).

Moreover, when the MAC address of the transmission source of the data is not registered in the MAC address safe list (step S1003: NO), the authentication unit 303 sends a password input request to the client apparatus 102 that has sent the data and requires a transmission of a password (step S1004). When the password is received (step S1005) from the client apparatus 102 to which the password input request has been sent, the authentication unit 303 performs an authentication for the password (step S1006). Meanwhile, this password is, for example, stored in advance in the storage unit 206 or the like and an authorized user has been notified.

In the case where the authentication for the password by the authentication unit 303 is successful (step S1006: YES), the MAC address of the client apparatus 102 that has sent the password is appended to the MAC address safe list (step S1007), and the normal processing is performed (step S1008).

Moreover, when the authentication for the password is not successful (failure) (step S1006: NO), the error processing is performed (step S1009).

According to the above operations, in the case where a MAC address of a client apparatus 102 is not registered in the MAC address safe list, by inputting a predetermined password a registration of the MAC address can be performed via a wireless LAN network.

According to the present embodiment, an authorized user having authentication information such as a password can easily register plural client apparatuses that the user possesses in the MAC address safe list.

### [Other embodiment]

The respective embodiments described as above are examples of the image projection system 100 according to the present invention and do not limit the scope of the present invention. For example, it is explained that the image projection apparatus 101 is provided with a function of an access point. However, the image projection apparatus 101 may have a function of a wireless LAN router in which a router function is added to the access point function. Moreover, the connection between the image projection apparatus 101 and the network 104 may be, for example, via a wireless connection by a wireless LAN, a mobile communication network or the like. Furthermore, the image projection apparatus 101 may have a function of an access point operation independently of the network 104 such as Wi-Fi direct (trademark registered).

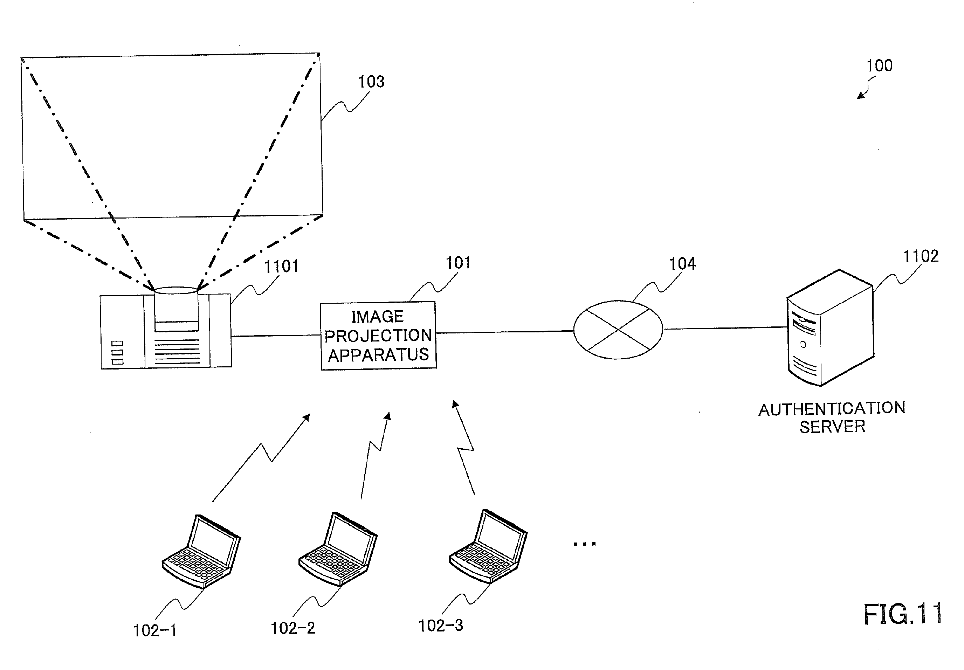

Moreover, all the units of the image projection apparatus 101 shown in Fig. 3 are not necessarily contained in the image projection apparatus 101 but may be configured as an image projection system 100. For example, as shown in Fig. 11, the authentication unit 303 may be an external authentication server 1102 or the like. Moreover, as long as the image projection apparatus 101 has at least a part of the projection control unit 304 for controlling a projection of an image, a projection part 1101 such as the projection unit 222 or the like may be provided outside the chassis.

Furthermore, the authentication methods shown in the first and second embodiment are examples. Other authentication methods may be employed. For example, when a data frame of a destination other than the image projection apparatus 101 is first received from the client apparatus 102, a transmission of authentication information such as a password or a certificate may be requested and it may be determined whether to permit a further connection.

Furthermore, the MAC address is an example of information indicating a destination of data. As information indicating the destination, for example, information such as an IP (Internet Protocol) address or a URL (Uniform Resource Locator) may be employed.

Further, the present invention is not limited to these embodiments, but various variations and modifications may be made without departing from the scope of the present invention.

The present application is based on and claims the benefit of priority of Japanese Priority Application No. 2013-222893 filed on October 28, 2013, the entire contents of which are hereby incorporated by reference.

## Claims

1. An image projection apparatus connected to a network and serving as an access point to connect a client apparatus to the network, comprising:
a determination unit that determines whether image data received from the client apparatus are addressed to the access point;
a projection control unit that projects an image based on the image data received from the client apparatus when the image data received from the client apparatus are addressed to the access point;
an authentication unit that performs an authentication for the client apparatus based on the image data received from the client apparatus when the image data received from the client apparatus are not addressed to the access point; and
an access control unit that restricts an access from the client apparatus to the network when the image data received from the client apparatus are not addressed to the access point and the authentication for the client apparatus based on the image data received from the client apparatus by the authentication unit has failed.

2. The image projection apparatus as claimed in claim 1 further comprising a storage unit that stores one or more pieces of identification information of the client apparatus wherein the authentication for the client apparatus based on the image data received from the client apparatus by the authentication unit succeeds when the client apparatus has identification information which coincides with one of the one or more pieces of identification information existing in the storage unit.

3. The image projection apparatus as claimed in claim 2, wherein the authentication unit requires the client apparatus to send authentication information, when the client apparatus does not have identification information which coincides with any of the one or more pieces of identification information existing in the storage unit.

4. The image projection apparatus as claimed in claim 3, wherein the storage unit stores the identification information that the client apparatus has, when the authentication for the client apparatus by the authentication unit based on the authentication information sent from the client apparatus succeeds.

5. An image projection system comprising:
a network; and
the image projection apparatus as claimed in any one of claims 1 to 4, wherein the authentication unit is connected to the access control unit and the determination unit via the network.

6. An image projection method in an image projection apparatus connected to a network and serving as an access point to connect a client apparatus to the network, the method comprising:
determining whether image data received from the client apparatus are addressed to the access point;
projecting an image based on the image data received from the client apparatus when the image data received from the client apparatus are addressed to the access point;
performing an authentication for the client apparatus based on the image data received from the client apparatus when the image data received from the client apparatus are not addressed to the access point; and
restricting an access from the client apparatus to the network when the image data received from the client apparatus are not addressed to the access point and the authentication for the client apparatus based on the image data received from the client apparatus has failed.

7. A non-transitory computer-readable storage medium storing a program for causing a computer to perform a process of projecting an image in an image projection apparatus connected to a network and serving as an access point to connect a client apparatus to the network, the process comprising:
a step of determining whether image data received from the client apparatus are addressed to the access point;
a step of projecting an image based on the image data received from the client apparatus when the image data received from the client apparatus are addressed to the access point;
a step of performing an authentication for the client apparatus based on the image data received from the client apparatus when the image data received from the client apparatus are not addressed to the access point; and
a step of restricting an access from the client apparatus to a network when the image data received from the client apparatus are not addressed to the access point and the authentication for the client apparatus based on the image data received from the client apparatus has failed.
